# EUROPÄISCHE PATENTANMELDUNG

(11) **EP 3 918 963 A1**
(43) Veröffentlichungstag der Anmeldung: **08.12.2021**
(21) Anmeldenummer: 21176597.9
(22) Anmeldetag: 28.05.2021
(51) Int. Cl.: A47J 43/07, A47J 36/32, A47J 43/044, A47J 43/08

(54) **LEBENSMITTELBEARBEITUNGSVORRICHTUNG**

(30) Priorität: 03.06.2020 EP 20382476
(71) Anmelder: BSH Hausgeräte GmbH, 81739 München (DE)
(72) Erfinder: Bode, Sophie, 81547 München (DE); Camañes Vera, Victor, 50003 Zaragoza (ES); Dudarenka, Alena, 80797 München (DE); Dziebowski, Sabine, 81541 München (DE); Mir Bel, Jorge, 50019 Zaragoza (ES); Parra Borderías, Maria, 50006 Zaragoza (ES); Rodriguez Larrosa, Agostina, 50011 Zaragoza (ES); Valeau Martin, David, 50009 Zaragoza (ES); Villanueva Valero, Beatriz, 50011 Zaragoza (ES)

(57) **Zusammenfassung**

Die Erfindung geht aus von einer Lebensmittelbearbeitungsvorrichtung (10a; 10b), insbesondere von einer Gargeschirrvorrichtung, mit zumindest einer Rühreinheit (12a; 12b), umfassend zumindest ein Rührelement (14a; 14b), mit zumindest einer Antriebseinheit (16a; 16b) zu einem Antrieb der Rühreinheit (12a; 12b) und mit einer Steuereinheit (18a; 18b) zu einer Steuerung der Rühreinheit (12a; 12b).

Um einen Bedienkomfort zu verbessern wird vorgeschlagen, dass die Steuereinheit (18a; 18b) dazu vorgesehen ist, eine Störung der Rühreinheit (12a; 12b) zu detektieren und im Falle einer Störung zumindest einen Fehlerbehebungsprozess (20a; 20b) zu einer Behebung der Störung zumindest zu initiieren.

## Beschreibung

Die Erfindung betrifft eine Lebensmittelbearbeitungsvorrichtung nach dem Oberbegriff des Anspruchs 1 und ein Verfahren zum Betrieb einer Lebensmittelbearbeitungsvorrichtung nach dem Oberbegriff des Anspruchs 12.

Aus dem Stand der Technik sind bereits Vorrichtungen mit Rühreinheiten zur Lebensmittelbearbeitung bekannt, welche Rührelemente umfassen, die in der Regel durch mechanische Steck- oder Rastverbindungen mit der Rühreinheit verbindbar und durch eine Antriebseinheit antreibbar sind. Kommt es während eines Betriebs zu einer Störung der Rühreinheit, beispielsweise zu einem Feststecken oder einem ungewollten Lösen des Rührelements von der Rühreinheit, welche durch einen Nutzer nicht oder erst zu spät bemerkt wird, kann dies zu einem Misslingen bei einer Lebensmittelzubereitung, beispielsweise zu einem Anbrennen, Stocken oder Verklumpen von Lebensmitteln, beispielsweise von Soßen oder dergleichen, und/oder zu ungewollten Verzögerungen bei der Lebensmittelbearbeitung und in einigen Fällen sogar zu Beschädigungen der Rühreinheit und/oder der Antriebseinheit und/oder zu Gefahren für den Nutzer führen.

Die Aufgabe der Erfindung besteht insbesondere, aber nicht beschränkt darauf, darin, eine gattungsgemäße Vorrichtung mit verbesserten Eigenschaften hinsichtlich eines Komforts bereitzustellen. Die Aufgabe wird erfindungsgemäß durch die Merkmale der Ansprüche 1 und 12 gelöst, während vorteilhafte Ausgestaltungen und Weiterbildungen der Erfindung den Unteransprüchen entnommen werden können.

Die Erfindung geht aus von einer Lebensmittelbearbeitungsvorrichtung, insbesondere Gargeschirrvorrichtung, mit zumindest einer Rühreinheit, umfassend zumindest ein Rührelement, mit zumindest einer Antriebseinheit zu einem Antrieb der Rühreinheit und mit einer Steuereinheit zu einer Steuerung der Rühreinheit.

Es wird vorgeschlagen, dass die Steuereinheit dazu vorgesehen, ist eine Störung der Rühreinheit zu detektieren und im Falle einer Störung einen Fehlerbehebungsprozess zu einer Behebung der Störung zumindest zu initiieren.

Durch eine derartige Ausgestaltung kann vorteilhaft ein Bedienkomfort und/oder eine Sicherheit für einen Nutzer gesteigert werden. Indem die Steuereinheit eine Störung der Rühreinheit detektiert und rechtzeitig einen Fehlerbehebungsprozess zu einer Behebung der Störung zumindest initiiert, können vorteilhaft aus der Störung der Rühreinheit resultierende unerwünschte Effekte verhindert werden. Hierdurch kann vorteilhaft ein Bedienkomfort und/oder ein Bedienerlebnis für den Nutzer gesteigert werden. Beispielsweise können vorteilhaft eine Blockierung und/oder eine Entkopplung des Rührelements frühzeitig erkannt und behoben und somit ein Anbrennen und/oder Stocken und/oder Verklumpen und/oder dergleichen verhindert werden. Ferner kann vorteilhaft eine Sicherheit für einen Nutzer erhöht werden, indem aus einer Störung der Rühreinheit resultierende Gefahren, beispielsweise eine Brandgefahr, minimiert, vorzugsweise gänzlich verhindert, werden können. Zudem kann vorteilhaft eine aus einer Störung resultierende Beschädigung der Rühreinheit und/oder der Antriebseinheit, beispielsweise durch Überlast bei einer Blockierung des Rührelements, verhindert werden.

Unter einer "Lebensmittelbearbeitungsvorrichtung" soll zumindest ein Teil, insbesondere eine Unterbaugruppe, eines Lebensmittelbearbeitungsgeschirrs, insbesondere eines Gargeschirrs, und/oder zumindest ein Zubehörteil für ein Lebensmittelbearbeitungsgeschirr verstanden werden. Beispielsweise könnte das Lebensmittelbearbeitungsgeschirr, insbesondere im Fall, in welchem die Lebensmittelbearbeitungsvorrichtung Teil des Lebensmittelbearbeitungsgeschirrs ist, die Lebensmittelbearbeitungsvorrichtung aufweisen. Alternativ oder zusätzlich könnte die Lebensmittelbearbeitungsvorrichtung als Zubehör des Lebensmittelbearbeitungsgeschirrs ausgebildet und insbesondere zu einem Gebrauch mit dem Lebensmittelbearbeitungsgeschirr vorgesehen sein.

Unter einem "Lebensmittelbearbeitungsgeschirr" soll eine Einheit verstanden werden, welche zumindest einen Lebensmittelaufnahmeraum zu einer Aufnahme und Bearbeitung zumindest eines Lebensmittels wenigstens teilweise definiert und/oder begrenzt. Das Lebensmittelbearbeitungsgeschirr kann insbesondere als ein Gargeschirr ausgebildet und insbesondere zu einer Beheizung, insbesondere durch zumindest eine Heizeinheit, insbesondere zumindest eines Garsystems und/oder zumindest eines Gargeräts, vorgesehen sein. Das Gargeschirr kann dazu vorgesehen sein, mittels einer durch die Beheizung aufgenommenen Energie zumindest ein in dem Lebensmittelaufnahmeraum angeordnetes Lebensmittel zu erhitzen und/oder zu garen und/oder warmzuhalten. Beispielsweise könnte das Gargeschirr zu einem Einbringen in zumindest einen Garraum, insbesondere eines als Ofen ausgebildeten Gargeräts, vorgesehen sein. Vorzugsweise ist das Gargeschirr zu einem Aufstellen auf zumindest einer Aufstellplatte, insbesondere zum Zweck einer Beheizung, vorgesehen. Das Gargeschirr könnte beispielsweise zumindest einen Topf und/oder zumindest eine Pfanne und/oder zumindest ein Backblech aufweisen. Alternativ oder zusätzlich könnte das Lebensmittelbearbeitungsgeschirr als ein von einem Gargeschirr verschiedenes Geschirr ausgebildet, und insbesondere nicht zu einer Beheizung vorgesehen, sein. Beispielsweise könnte das Lebensmittelbearbeitungsgeschirr als eine Rührschüssel und/oder als ein Mixbecher und/oder als ein sonstiges Geschirr mit zumindest einem Lebensmittelaufnahmeraum ausgebildet sein. Unter der Wendung, dass ein Objekt den Lebensmittelaufnahmeraum "wenigstens teilweise" begrenzt, soll verstanden werden, dass das Objekt den Lebensmittelaufnahmeraum alleine oder gemeinsam mit zumindest einem weiteren Objekt begrenzt. Das Objekt und/oder das weitere Objekt könnte beispielsweise das Lebensmittelbearbeitungsgeschirr und/oder zumindest ein Deckel des Lebensmittelbearbeitungsgeschirrs und/oder zumindest eine Gehäuseeinheit, insbesondere der Lebensmittelbearbeitungsvorrichtung, sein.

Unter einer "Rühreinheit" soll eine Einheit verstanden werden, welche, insbesondere mittels des zumindest einen Rührelements, dazu vorgesehen ist, zumindest ein Lebensmittel in eine Bewegung relativ zu dem Lebensmittelaufnahmeraum zu versetzen, insbesondere umzurühren und/oder zu verrühren und/oder zu mixen und/oder zu verquirlen und/oder aufzulockern. Unter einem "Rührelement" soll ein Element der Rühreinheit verstanden werden, welches zumindest ein Lebensmittel in eine Relativbewegung zu dem Lebensmittelaufnahmeraum versetzt, insbesondere umrührt und/oder verrührt und/oder mixt und/oder verquirlt und/oder auflockert und welches in einem Betriebszustand wenigstens abschnittsweise in Kontakt mit dem Lebensmittel angeordnet ist. Unter der Wendung, dass das Rührelement in dem Betriebszustand "wenigstens abschnittsweise" in Kontakt mit dem Lebensmittel angeordnet ist, soll verstanden werden, dass das Rührelement zumindest einen Abschnitt aufweist, welcher in dem Betriebszustand in Kontakt mit dem Lebensmittel angeordnet ist, und zumindest einen weiteren Abschnitt aufweisen könnte, welcher in dem Betriebszustand frei von einem Kontakt mit dem Lebensmittel sein könnte.

Unter einer "Antriebseinheit" soll eine Einheit verstanden werden, welche in dem Betriebszustand zumindest ein Antriebsmoment, insbesondere ein Antriebsdrehmoment, und/oder zumindest eine Antriebskraft zu einer Bewegung der Rühreinheit, insbesondere des Rührelements der Rühreinheit, insbesondere entlang einer Bewegungsbahn und/oder um eine Bewegungsachse herum, bereitstellt. Beispielsweise könnte die Antriebseinheit zumindest einen Antriebsmotor aufweisen, welcher das Antriebsmoment und/oder die Antriebskraft bereitstellen könnte und welcher beispielsweise als ein Elektromotor ausgebildet sein könnte. Die Antriebseinheit könnte insbesondere eine Kupplung und/oder Getriebe zu einer Übertragung und/oder Einstellung des an die Rühreinheit, insbesondere des an das Rührelement der Rühreinheit, bereitgestellten Antriebsmoments, aufweisen.

Unter einer "Steuereinheit" soll eine elektronische Einheit verstanden werden, die vorzugsweise in einer Steuer- und/oder Regeleinheit der Lebensmittelbearbeitungsvorrichtung zumindest teilweise integriert ist und die vorzugsweise dazu vorgesehen ist, zumindest die Rühreinheit und/oder die Antriebseinheit zu steuern und/oder zu regeln. Vorzugsweise umfasst die Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden. Der Fehlerbehebungsprozess, welcher durch die Steuereinheit im Falle einer Detektion einer Störung zumindest initiiert wird, umfasst zumindest einen ersten Prozessschritt, welcher von der Steuereinheit automatisch durchgeführt wird. Der erste Prozessschritt ist vorzugsweise in Form eines Algorithmus in der Speichereinheit der Steuereinheit abrufbar gespeichert.

Unter "vorgesehen" soll vorzugsweise speziell programmiert, speziell ausgelegt und/oder speziell ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt.

Ferner wird vorgeschlagen, dass die Steuereinheit dazu vorgesehen ist, die Störung anhand einer Abweichung zumindest eines Parameters der Antriebseinheit von einem vordefinierten Parameterbereich zu detektieren. Hierdurch kann eine Störung der Rühreinheit vorteilhaft mit einfachen technischen Mitteln detektiert werden. Es wäre denkbar, dass der vordefinierte Parameterbereich als eine Werkseinstellung in der Speichereinheit der Steuereinheit fest und unveränderlich gespeichert ist. Vorzugsweise ist der vordefinierte Parameterbereich veränderlich. Beispielsweise wäre denkbar, dass der vordefinierte Parameterbereich in Abhängigkeit einer Betriebssituation, beispielsweise automatisch durch die Steuereinheit anhand eines durch einen Nutzer gewählten Betriebsmodus der Lebensmittelbearbeitungsvorrichtung oder individuell durch den Nutzer, veränderlich ist. Beispielsweise könnte der Parameterbereich ausgehend von einer Voreinstellung anhand einer Masse und/oder eines Volumens und/oder einer Viskosität von mittels der Lebensmittelbearbeitungsvorrichtung zu bearbeitenden Lebensmitteln veränderlich sein. Zudem wäre denkbar, dass der vordefinierte Parameterbereich anhand eines gewählten Rührelements und/oder einer Rührdauer und/oder einer Rührgeschwindigkeit der Rühreinheit veränderlich ist. Hierdurch kann vorteilhaft eine Detektion von Störungen in verschiedenen Betriebssituationen der Lebensmittelbearbeitungsvorrichtung weiter verbessert werden und eine Möglichkeit von Fehldetektionen verringert werden.

Es wäre beispielsweise denkbar, dass es sich bei dem Parameter um eine Drehzahl der Rühreinheit oder um ein durch die Antriebseinheit bereitgestelltes Antriebsmoment handelt. In einer vorteilhaften Ausgestaltung wird jedoch vorgeschlagen, dass der Parameter eine elektrische Leistungsaufnahme der Antriebseinheit charakterisiert. Hierdurch kann vorteilhaft ein durch die Steuereinheit besonders einfach zu detektierender Parameter gewählt werden. Bei dem die elektrische Leistungsaufnahme der Antriebseinheit charakterisierenden Parameter könnte es sich beispielsweise um einen elektrischen Strom und/oder eine elektrische Spannung und/oder einen elektrischen Widerstand handeln. Eine Veränderung eines die elektrische Leistungsaufnahme der Antriebseinheit charakterisierenden Parameters könnte durch die Steuereinheit beispielsweise mittels eines Nebenschlusswiderstands an der Antriebseinheit detektierbar sein. Auf diese Weise wäre eine Detektion des Parameters durch die Steuereinheit vorteilhaft mit besonders einfachen Mitteln und daher besonders kostengünstig umsetzbar.

Des Weiteren wird vorgeschlagen, dass die Steuereinheit dazu vorgesehen ist, eine Unterschreitung des Parameters von dem voreingestellten Parameterbereich als eine Entkopplung des Rührelements von der Rühreinheit zu interpretieren. Hierdurch kann vorteilhaft eine durch einen Nutzer unerwünschte Entkopplung des Rührelements von der Rühreinheit zeitnah und mit einfachen Mitteln durch die Steuereinheit automatisch erkannt und ein dementsprechender Fehlerbehebungsprozess initiiert werden, wodurch ein Bedienkomfort und/oder ein Bedienerlebnis für den Nutzer weiter verbessert werden kann. Im Falle einer Entkopplung des Rührelements von der Rühreinheit reduziert sich beispielsweise eine elektrische Leistungsaufnahme der Antriebseinheit, aufgrund eines deutlich verringerten mechanischen Widerstands, signifikant, so dass eine derartige Störung der Rühreinheit durch die Steuereinheit detektierbar ist.

Darüber hinaus wird vorgeschlagen, dass die Steuereinheit dazu vorgesehen ist, eine Überschreitung des Parameters von dem voreingestellten Parameterbereich als eine Blockierung des Rührelements zu interpretieren. Hierdurch kann vorteilhaft eine Blockierung des Rührelements zeitnah und mit einfachen Mitteln durch die Steuereinheit automatisch erkannt und ein dementsprechender Fehlerbehebungsprozess initiiert werden. Im Falle einer Blockierung des Rührelements von der Rühreinheit erhöht sich beispielsweise eine elektrische Leistungsaufnahme der Antriebseinheit, aufgrund eines deutlich erhöhten mechanischen Widerstands, signifikant, so dass eine derartige Störung der Rühreinheit durch die Steuereinheit detektierbar ist.

Ferner wird vorgeschlagen, dass die Lebensmittelbearbeitungsvorrichtung eine Signalausgabeeinheit aufweist, welche die Steuereinheit zur Ausgabe zumindest eines Störsignals ansteuert. Hierdurch kann im Falle einer detektierten Störung der Rühreinheit ein Nutzer mit besonders einfachen Mitteln auf die Störung hingewiesen werden. Es wäre denkbar, dass die Signalausgabeeinheit zu der Ausgabe des Störsignals zumindest ein optisches Signalausgabeelement, beispielsweise eine LED oder dergleichen, aufweist. Zudem wäre denkbar, dass die Signalausgabeeinheit zu der Ausgabe des Störsignals ein akustisches Signalausgabeelement, beispielsweise einen kleinen Lautsprecher oder dergleichen, aufweist. Vorzugsweise weist die Signalausgabeeinheit sowohl zumindest ein optisches Signalausgabeelement als auch zumindest ein akustisches Signalausgabeelement auf. Es ist denkbar, dass eine Art der Ausgabe des Störsignals durch die Signalausgabeeinheit in Abhängigkeit der Art einer durch die Steuereinheit detektierten Störung variierbar ist. Beispielsweise könnte die Signalausgabeeinheit im Falle einer ersten Art von Störung ausschließlich ein erstes optisches Störsignal ausgeben und im Falle einer zweiten von der ersten Art verschiedenen Art von Störung ein zweites optisches Störsignal und/oder ein akustisches Störsignal ausgeben.

Zudem wird vorgeschlagen, dass die Lebensmittelbearbeitungsvorrichtung eine Datenübertragungseinheit zu einer Datenübertragung mit zumindest einer externen Einheit aufweist. Durch eine derartige Ausgestaltung kann vorteilhaft ein Bedienkomfort und/oder ein Bedienerlebnis für einen Nutzer weiter verbessert werden. Die Datenübertragungseinheit könnte zu einer kabelgebundenen Datenübertragung mit der externen Einheit vorgesehen sein. Vorzugsweise ist die Datenübertragungseinheit zu einer drahtlosen Datenübertragung mit der externen Einheit vorgesehen. Die drahtlose Datenübertragung könnte beispielsweise nach dem Bluetooth-Standard, dem Wireless-Lan-Standard, dem Z-Wave-Standard, dem Zig-Bee-Standard oder einem anderen, einem Fachmann für eine Datenübertragung als sinnvoll erscheinenden Funkstandard erfolgen. Bei der externen Einheit könnte es sich beispielsweise um ein Haushaltsgerät, beispielsweise um ein Gargerät, wie etwa ein Kochfeld und/oder ein Backofen und/oder eine Mikrowelle und/oder ein Grill oder dergleichen, oder um ein Kühlgerät, beispielsweise einen Kühlschrank und/oder einen Gefrierschrank oder dergleichen, handeln. Alternativ oder zusätzlich ist denkbar, dass es sich bei der externen Einheit um ein, insbesondere mobiles, Endgerät eines Nutzers, wie etwa ein Smartphone und/oder eine Smartwatch und/oder ein Tablet und/oder ein Laptop oder dergleichen, handelt. Vorzugsweise ist die Datenübertragungseinheit zu einer, insbesondere zeitgleichen, Datenübertragung mit einer Mehrzahl von verschiedenen externen Einheiten vorgesehen. Die Datenübertragungseinheit könnte zu einer unidirektionalen Datenübertragung, beispielsweise einem ausschließlichen Senden von Daten an die externe Einheit, vorgesehen sein. Vorzugsweise ist die Datenübertragungseinheit jedoch zu einer bidirektionalen Datenübertragung, also sowohl zu einem Senden als auch zu einem Empfang von Daten, vorgesehen.

Darüber hinaus wird vorgeschlagen, dass die Steuereinheit dazu vorgesehen ist, mittels der Datenübertragungseinheit zumindest eine die Störung betreffende Information an die externe Einheit zu übertragen. Hierdurch kann vorteilhaft die externe Einheit in den Fehlerbehebungsprozess involviert werden. Beispielsweise kann vorteilhaft ein Nutzer im Falle einer Störung mittels der externen Einheit über die Störung informiert werden. Vorzugsweise beinhaltet die die Störung betreffende Information zumindest einen Status der Störung. Beispielsweise wäre denkbar, dass die Steuereinheit im Falle einer Störung mittels der Datenübertragungseinheit eine die Störung betreffende Information an die externe Einheit überträgt, um einen Nutzer über eine Detektion der Störung zu informieren. Zusätzlich wäre in diesem Fall denkbar, dass die die Störung betreffende Information eine Anweisung an den Nutzer beinhaltet. Beispielsweise könnte ein Nutzer im Falle einer Entkopplung des Rührelements von der Rühreinheit dazu aufgefordert werden, das Rührelement erneut an die Rühreinheit anzukoppeln, um so den durch die Steuereinheit zumindest initiierten Fehlerbehebungsprozess abzuschließen. Alternativ oder zusätzlich wäre denkbar, dass die Steuereinheit mittels der Datenübertragungseinheit eine die Störung betreffende Information an die externe Einheit überträgt, um einen Nutzer über eine Behebung der Störung, welche im Rahmen des Fehlerbehebungsprozesses, insbesondere automatisch durch die Steuereinheit, behoben wurde, zu informieren.

Ferner wird vorgeschlagen, dass der Fehlerbebungsprozess zumindest eine Richtungsänderung einer Rührbewegung der Rühreinheit umfasst. Hierdurch kann vorteilhaft eine Störung im Rahmen des Fehlerbehebungsprozesses selbsttätig durch die Steuereinheit behoben werden, wodurch, zumindest bei manchen Arten von Störungen, ein Eingreifen eines Nutzers bei dem Fehlerbehebungsprozess nicht mehr erforderlich ist und somit vorteilhaft ein Bedienkomfort und/oder ein Bedienerlebnis für den Nutzer weiter verbessert werden kann. Beispielsweise wäre denkbar, dass eine Störung, welche eine Blockierung des Rührelements umfasst, durch die Richtungsänderung der Rührbewegung der Rühreinheit im Rahmen des Fehlerbehebungsprozesses durch die Steuereinheit, insbesondere automatisch, behebbar ist. Hierdurch kann bei einigen Arten von Störungen vorteilhaft der Fehlerbehebungsprozess durch die Steuereinheit vollständig selbsttätig durchgeführt werden, wodurch ein Eingreifen des Nutzers nicht erforderlich ist und somit ein Bedienerlebnis weiter verbessert werden kann.

Zudem wird vorgeschlagen, dass der Fehlerbebungsprozess zumindest eine zumindest temporäre Veränderung einer Rührgeschwindigkeit der Rühreinheit umfasst. Durch eine derartige Ausgestaltung kann vorteilhaft eine weitere Möglichkeit zur Behebung einer Störung bereitgestellt werden, welche im Rahmen des Fehlerbehebungsprozesses selbsttätig durch die Steuereinheit durchführbar ist, wodurch, zumindest bei manchen Arten von Störungen, ein Eingreifen eines Nutzers bei dem Fehlerbehebungsprozess nicht mehr erforderlich ist und somit vorteilhaft ein Bedienkomfort und/oder ein Bedienerlebnis für den Nutzer weiter verbessert werden kann. Beispielsweise wäre denkbar, dass eine Störung, welche eine Blockierung des Rührelements umfasst, durch die temporäre Veränderung der Rührgeschwindigkeit der Rühreinheit im Rahmen des Fehlerbehebungsprozesses durch die Steuereinheit, insbesondere automatisch, behebbar ist. Die Steuereinheit könnte die Rührgeschwindigkeit beispielsweise temporär erhöhen, um die Blockierung des Rührelements zu beheben.

Des Weiteren wird vorgeschlagen, dass der Fehlerbehebungsprozess zumindest eine Veränderung eines Betriebszustands einer mit der Rühreinheit zu einer Lebensmittelbearbeitung gleichzeitig betriebenen externen Einheit umfasst. Hierdurch kann vorteilhaft eine Sicherheit erhöht werden. Zudem kann vorteilhaft ein Bedienkomfort und/oder ein Bedienerlebnis für einen Nutzer weiter verbessert werden. Beispielsweise wäre denkbar, dass es sich bei der mit der Rühreinheit zu der Lebensmittelbearbeitung gleichzeitig betriebenen externen Einheit um ein Kochfeld handelt, dessen Betriebszustand die Steuereinheit im Rahmen des Fehlerbehebungsprozesses verändert. Beispielsweise könnte die Steuereinheit eine Heizleistung einer Kochfeldplatte der als Kochfeld ausgebildeten externen Einheit, zumindest temporär, verringern oder die Kochfeldplatte, zumindest temporär, komplett abschalten, um beispielsweise ein Anbrennen eines mittels der Rühreinheit und der externen Einheit gleichzeitig zu bearbeitenden Lebensmittels zu verhindern. Vorzugsweise ist die Steuereinheit nach einer Beendigung des Fehlerbehebungsprozesses dazu vorgesehen, eine weitere Veränderung eines Betriebszustands, insbesondere eine Wiederherstellung eines vor einem Auftreten der Störung durch einen Nutzer eingestellten Betriebszustands, einer mit der Rühreinheit zu einer Lebensmittelbearbeitung gleichzeitig betriebenen externen Einheit durchzuführen. Beispielsweise könnte die Steuereinheit dazu vorgesehen sein, eine Heizleistung einer Kochfeldplatte der als Kochfeld ausgebildeten externen Einheit zeitweise zu verringern und nach Beendigung des Fehlerbehebungsprozesses wieder auf ein vor der Verringerung vorhandenes Niveau anzuheben.

Die Erfindung geht ferner aus von einem Verfahren zum Betrieb einer Lebensmittelbearbeitungsvorrichtung mit zumindest einer Rühreinheit und mit zumindest einer Antriebseinheit zu einem Antrieb der Rühreinheit.

Es wird vorgeschlagen, dass in einem Betriebszustand der Rühreinheit automatisch eine Störung detektiert und ein Fehlerbehebungsprozess zur Behebung der Störung initiiert wird. Durch eine derartige Ausgestaltung kann vorteilhaft ein Verfahren zum Betrieb einer Lebensmittelbearbeitungsvorrichtung im Hinblick auf eine Sicherheit und/oder im Hinblick auf ein Ergebnis der Lebensmittelbearbeitung verbessert werden.

Die Lebensmittelbearbeitungsvorrichtung soll hierbei nicht auf die oben beschriebene Anwendung und Ausführungsform beschränkt sein. Insbesondere kann die Lebensmittelbearbeitungsvorrichtung zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Lebensmittelbearbeitungsvorrichtung mit einer Rühreinheit, einer Antriebseinheit und einer Steuereinheit in einer schematischen perspektivischen Darstellung,
- Fig. 2: die Lebensmittelbearbeitungsvorrichtung in einer schematischen Schnittdarstellung,
- Fig. 3: ein schematisches Verfahrensfließbild eines Verfahrens zum Betrieb der Lebensmittelbearbeitungsvorrichtung,
- Fig. 4: ein alternatives Ausführungsbeispiel einer Lebensmittelbearbeitungsvorrichtung mit einer Rühreinheit, einer Antriebseinheit und einer Steuereinheit in einer schematischen perspektivischen Darstellung und
- Fig. 5: die Lebensmittelbearbeitungsvorrichtung des Ausführungsbeispiels der Figur 4 in einer schematischen Schnittdarstellung.

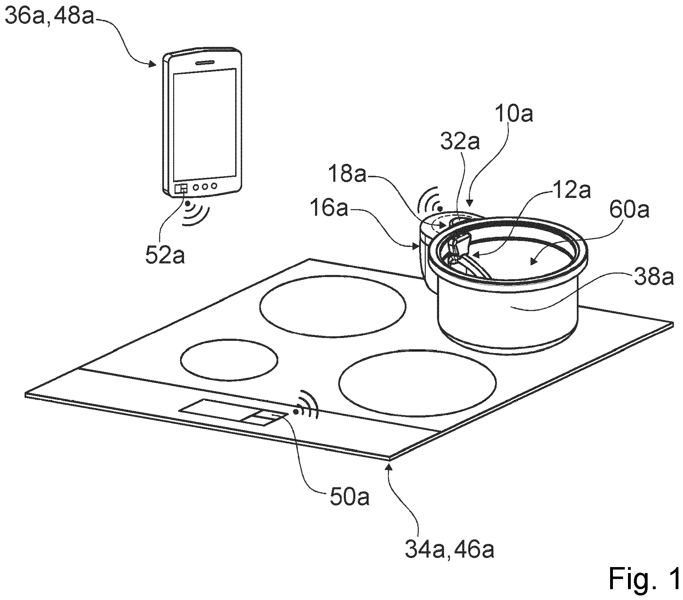

Figur 1 zeigt eine Lebensmittelbearbeitungsvorrichtung 10a in einer schematischen Darstellung. Die Lebensmittelbearbeitungsvorrichtung 10a ist als eine Gargeschirrvorrichtung ausgebildet. Die Lebensmittelbearbeitungsvorrichtung 10a ist zu einer Bearbeitung von Lebensmitteln in Kombination mit einem Lebensmittelbearbeitungsgeschirr 38a vorgesehen. Das Lebensmittelbearbeitungsgeschirr 38a ist als ein Gargeschirr ausgebildet und weist einen Aufnahmeraum 60a zu einer Aufnahme der zu bearbeitenden Lebensmittel auf.

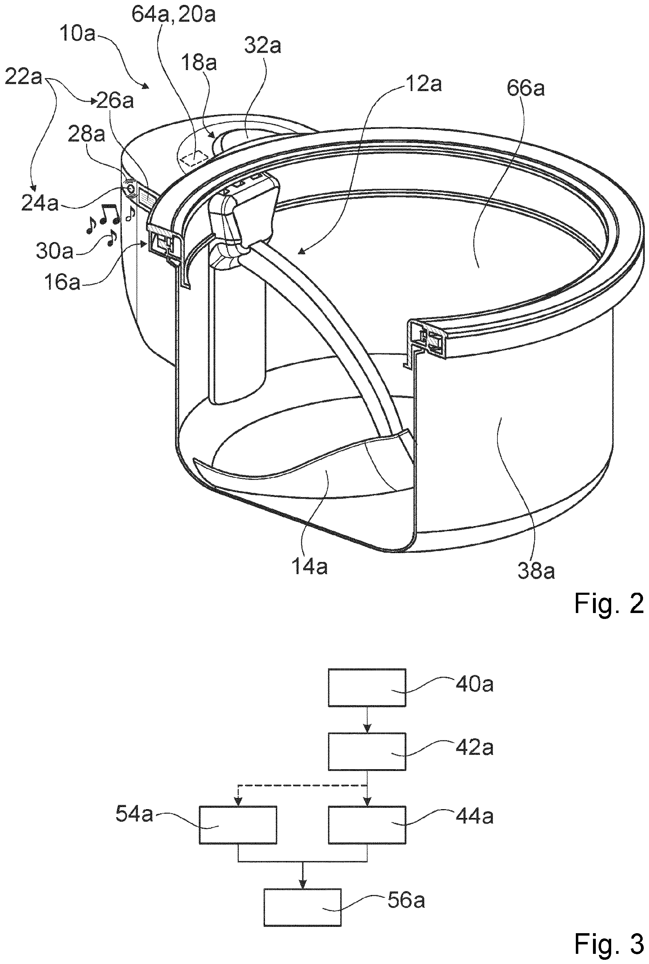

In Figur 2 ist die Lebensmittelbearbeitungsvorrichtung 10a in einer schematischen teilweisen Schnittdarstellung gezeigt. Die Lebensmittelbearbeitungsvorrichtung 10a umfasst eine Rühreinheit 12a. Die Rühreinheit 12a umfasst ein Rührelement 14a. Das Rührelement 14a ist wandgängig und magnetisch mit der Rühreinheit verbindbar. Die Lebensmittelbearbeitungsvorrichtung 10a umfasst eine Antriebseinheit 16a zu einem Antrieb der Rühreinheit 12a. In einem Betriebszustand der Lebensmittelbearbeitungsvorrichtung 10a wird das Rührelement 14a entlang einer Innenwandung 66a des Lebensmittelbearbeitungsgeschirrs 38a bewegt.

Die Lebensmittelbearbeitungsvorrichtung 10a umfasst eine Steuereinheit 18a zu einer Steuerung der Rühreinheit 12a. Die Steuereinheit 18a ist dazu vorgesehen, eine Störung der Rühreinheit 12a zu detektieren und im Falle einer Störung zumindest einen Fehlerbehebungsprozess 20a zu einer Behebung der Störung zumindest zu initiieren. Die Steuereinheit 18a umfasst eine Speichereinheit 64a. Der Fehlerbebungsprozess 20a umfasst zumindest eine Richtungsänderung einer Rührbewegung der Rühreinheit 12a. Der Fehlerbebungsprozess 20a umfasst zumindest eine zumindest temporäre Veränderung einer Rührgeschwindigkeit der Rühreinheit 12a. Der Fehlerbehebungsprozess 20a ist in der Speichereinheit 64a der Steuereinheit 18a gespeichert.

Die Steuereinheit 18a ist dazu vorgesehen, die Störung anhand einer Abweichung zumindest eines Parameters der Antriebseinheit 16a von einem vordefinierten Parameterbereich zu detektieren. Der Parameter charakterisiert eine elektrische Leistungsaufnahme der Antriebseinheit 16a. In dem vorliegenden Ausführungsbeispiel handelt es sich bei dem Parameter um einen elektrischen Strom, welcher in einem Betriebszustand der Lebensmittelbearbeitungsvorrichtung 10a von der Antriebseinheit 16a zu einer Bereitstellung eines Antriebsmoments zu dem Antrieb der Rühreinheit 12a aufgenommen wird, und welcher von der Steuereinheit 18a mittels eines mit der Antriebseinheit 16a verbundenen elektrischen Nebenschlusswiderstands (nicht dargestellt) messbar ist.

Die Steuereinheit 18a ist dazu vorgesehen, eine Unterschreitung des Parameters von dem voreingestellten Parameterbereich als eine Entkopplung des Rührelements 14a von der Rühreinheit 12a zu interpretieren. Im Falle einer Entkopplung des Rührelements 14a führt dies zu einem verringerten Reibungswiderstand, wodurch sich die Leistungsaufnahme der Antriebseinheit 16a zur Bereitstellung des Antriebsmoments an die Rühreinheit 12a verringert und der Parameter infolgedessen den voreingestellten Parameterbereich unterschreitet.

Die Steuereinheit 18a ist dazu vorgesehen, eine Überschreitung des Parameters von dem voreingestellten Parameterbereich als eine Blockierung des Rührelements 14a zu interpretieren. Im Falle einer Blockierung des Rührelements 14a führt dies zu einem erhöhten Reibungswiderstand, wodurch sich die Leistungsaufnahme der Antriebseinheit 16a zur Bereitstellung des Antriebsmoments an die Rühreinheit 12a erhöht und der Parameter infolgedessen den voreingestellten Parameterbereich überschreitet.

Die Lebensmittelbearbeitungsvorrichtung 10a umfasst eine Signalausgabeeinheit 22a. In dem Betriebszustand der Lebensmittelbearbeitungsvorrichtung 10a steuert die Steuereinheit 18a die Signalausgabeeinheit 22a zur Ausgabe zumindest eines Störsignals 28a, 30a an. Die Signalausgabeeinheit 22a umfasst ein optisches Signalausgabeelement 24a. Das optische Signalausgabeelement 24a ist als eine LED ausgebildet und zu einer Ausgabe eines optischen Störsignals 28a vorgesehen. Die Signalausgabeeinheit 22a umfasst ein akustisches Signalausgabeelement 26a. Das akustische Signalausgabeelement 26a ist als ein Lautsprecher ausgebildet und zu einer Ausgabe eines akustischen Störsignals 30a vorgesehen.

Die Lebensmittelbearbeitungsvorrichtung 10a umfasst eine Datenübertragungseinheit 32a zu einer Datenübertragung mit zumindest einer externen Einheit 34a, 36a (vgl. Figur 1). Die Datenübertragungseinheit 32a ist zu einem Senden und zu einem Empfang von Daten gemäß dem Bluetooth-Funkstandard ausgebildet. In der Figur 1 ist die externe Einheit 34a dargestellt. Die externe Einheit 34a ist als ein Kochfeld 46a ausgebildet und umfasst eine externe Datenübertragungseinheit 50a. In der Figur 1 ist die externe Einheit 36a dargestellt. Die externe Einheit 36a ist als ein Smartphone 48a ausgebildet und umfasst eine weitere externe Datenübertragungseinheit 52a.

Die Steuereinheit 18a ist dazu vorgesehen, mittels der Datenübertragungseinheit 32a zumindest eine die Störung betreffende Information an die externe Einheit 34a, 36a zu übertragen. In dem vorliegenden Ausführungsbeispiel überträgt die Steuereinheit 18a in dem Betriebszustand eine Störungsmeldung mittels der Datenübertragungseinheit 32a an die externe Einheit 34a und an die externe Einheit 36a, um einen Nutzer über die Störung zu informieren.

Der durch die Steuereinheit 18a initiierte Fehlerbehebungsprozess 20a umfasst eine Veränderung eines Betriebszustands einer mit der Rühreinheit 12a zu einer Lebensmittelbearbeitung gleichzeitig betriebenen externen Einheit 34a. In dem vorliegenden Ausführungsbeispiel ist die Rühreinheit 12a zu der Lebensmittelbearbeitung gleichzeitig mit der als Kochfeld 46a ausgebildeten externen Einheit 34a betreibbar. Der Fehlerbehebungsprozess 20a umfasst in dem vorliegenden Ausführungsbeispiel eine Abschaltung des Kochfelds 46a als die Veränderung des Betriebszustands der externen Einheit 34a. In dem vorliegenden Ausführungsbeispiel schaltet die Steuereinheit 18a im Rahmen des Fehlerbehebungsprozesses das Kochfeld 46a, mittels eines über die Datenübertragungseinheit 32a an das Kochfeld 46a übermittelten Signals, automatisch ab, sobald eine Störung länger als eine Minute andauert.

Figur 3 zeigt ein schematisches Verfahrensfließbild eines Verfahrens zum Betrieb der Lebensmittelbearbeitungsvorrichtung 10a. Das Verfahren umfasst einen ersten Verfahrensschritt 40a. In dem Verfahrensschritt 40a überwacht die Steuereinheit 18a einen Parameter der Antriebseinheit 16a. Weicht der von der Steuereinheit 18a überwachte Parameter von dem vordefinierten Parameterbereich ab, wird in dem Verfahrensschritt 40a durch die Steuereinheit 18a automatisch eine Störung detektiert. Im Falle einer durch die Steuereinheit 18a automatisch detektierten Störung wird der Verfahrensschritt 40a beendet und es schließt sich diesem automatisch ein weiterer Verfahrensschritt 42a an. Der weitere Verfahrensschritt 42a umfasst Teile des Fehlerbehebungsprozesses 20a, welcher durch die Steuereinheit 20a automatisch initiiert wird. Während des weiteren Verfahrensschritts 42a überträgt die Steuereinheit 18a mittels der Datenübertragungseinheit 32a zunächst eine die Störung betreffende Information an die externe Einheit 34a und die weitere externe Einheit 36a, um einen Nutzer über die Detektion der Störung zu informieren. Handelt es sich bei der Abweichung des Parameters um eine Unterschreitung des voreingestellten Parameterbereichs, wird die Störung durch die Steuereinheit 18a als eine Entkopplung des Rührelements 14a von der Rühreinheit 12a interpretiert. In diesem Falle schließt sich ein optionaler Verfahrensschritt 44a, welcher weitere Teile des Fehlerbehebungsprozesses 20a umfasst, an den weiteren Verfahrensschritt 42a an. In dem optionalen Verfahrensschritt 44a überträgt die Steuereinheit 18a mittels der Datenübertragungseinheit 32a eine weitere die Störung betreffende Information an die externe Einheit 34a und die weitere externe Einheit 36a, um den Nutzer über die Entkopplung des Rührelements 14a von der Rühreinheit 12a zu informieren und den Nutzer zu bitten, das Rührelement 14a erneut an die Rühreinheit 12a anzukoppeln, um so die Fehlerbehebung manuell fertigzustellen. Handelt es sich bei der Abweichung des Parameters um eine Überschreitung des voreingestellten Parameterbereichs, wird die Störung durch die Steuereinheit 18a als eine Blockierung des Rührelements 14a von der Rühreinheit 12a interpretiert. In diesem Falle schließt sich ein weiterer optionaler Verfahrensschritt 54a an den weiteren Verfahrensschritt 42a an. In dem weiteren optionalen Verfahrensschritt 54a, welcher weitere Teile des Fehlerbehebungsprozesses 20a beinhaltet, wird zunächst eine Rührgeschwindigkeit der Rühreinheit 12a durch die Steuereinheit 18a temporär verändert, und zwar verringert. Anschließend wird in dem weiteren optionalen Verfahrensschritt 54a eine Richtung einer Rührbewegung der Rühreinheit 12a durch die Steuereinheit 18a umgekehrt. Dem optionalen Verfahrensschritt 44a oder dem optionalen Verfahrensschritt 54a schließt sich ein weiterer Verfahrensschritt 56a an. In dem weiteren Verfahrensschritt 56a wird überprüft, ob die Störung durch die Durchführung des optionalen Verfahrensschritts 44a bzw. des optionalen Verfahrensschritts 54a behoben werden konnte, indem die Steuereinheit 18a automatisch detektiert, ob der Parameter innerhalb des vordefinierten Parameterbereichs liegt. Wenn dies der Fall ist, wird der Nutzer automatisch über die Behebung der Störung informiert. Andernfalls erhält der Nutzer einen Hinweis, dass die Störung manuell behoben werden muss.

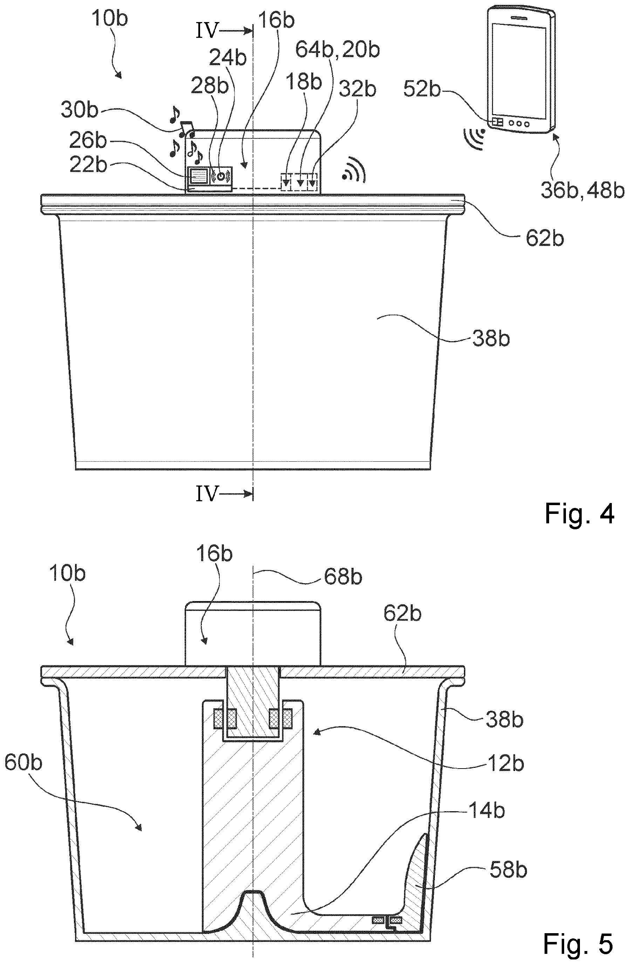

In den Figuren 4 und 5 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 3 verwiesen werden kann. Zur Unterscheidung der Ausführungsbeispiele ist der Buchstabe a in den Bezugszeichen des Ausführungsbeispiels in den Figuren 1 bis 3 durch den Buchstaben b in den Bezugszeichen des Ausführungsbeispiels der Figuren 4 und 5 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 3 verwiesen werden.

Figur 4 zeigt eine Lebensmittelbearbeitungsvorrichtung 10b eines weiteren Ausführungsbeispiels in einer schematischen Darstellung. Die Lebensmittelbearbeitungsvorrichtung 10b ist zu einer Bearbeitung von Lebensmitteln in Kombination mit einem Lebensmittelbearbeitungsgeschirr 38b vorgesehen. Das Lebensmittelbearbeitungsgeschirr 38b ist als eine Rührschüssel ausgebildet und weist einen Aufnahmeraum 60b (vgl. Fig. 5) zu einer Aufnahme der zu bearbeitenden Lebensmittel auf. Die Lebensmittelbearbeitungsvorrichtung 10b weist einen Deckel 62b auf, welcher zu einem Schließen des Aufnahmeraums 60b des Lebensmittelbearbeitungsgeschirrs 38b vorgesehen ist.

Figur 5 zeigt eine schematische Schnittdarstellung der Lebensmittelbearbeitungsvorrichtung 10b entlang einer in der Figur 4 dargestellten Schnittkante IV. Die Lebensmittelbearbeitungsvorrichtung 10b umfasst eine Rühreinheit 12b. Die Rühreinheit 12b umfasst ein Rührelement 14b. Das Rührelement 14b ist magnetisch mit der Rühreinheit 12b verbindbar. Die Rühreinheit 12b umfasst ein Ergänzungsrührelement 58b. Das Ergänzungsrührelement 58b ist magnetisch mit dem Rührelement 14b verbindbar und wandgängig. Die Lebensmittelbearbeitungsvorrichtung 10b umfasst eine Antriebseinheit 16b zu einem Antrieb der Rühreinheit 12b. In einem Betriebszustand der Lebensmittelbearbeitungsvorrichtung 10b wird die Rühreinheit 12b um eine Drehachse 68b durch die Antriebseinheit 16b angetrieben.

Die Lebensmittelbearbeitungsvorrichtung 10b umfasst eine Steuereinheit 18b zu einer Steuerung der Rühreinheit 12b. Die Steuereinheit 18b ist im Wesentlichen identisch zu der Steuereinheit 18a des vorhergehenden Ausführungsbeispiels und dazu vorgesehen, eine Störung der Rühreinheit 12b zu detektieren und im Falle einer Störung zumindest einen Fehlerbehebungsprozess 20b zu einer Behebung der Störung zumindest zu initiieren. Die Steuereinheit 18b umfasst eine Speichereinheit 64b. Der Fehlerbebungsprozess 20b umfasst zumindest eine Richtungsänderung einer Rührbewegung der Rühreinheit 12b und zumindest eine zumindest temporäre Veränderung einer Rührgeschwindigkeit der Rühreinheit 12b. Der Fehlerbehebungsprozess 20b ist in der Speichereinheit 64b der Steuereinheit 18b gespeichert.

Die Steuereinheit 18b ist dazu vorgesehen, die Störung anhand einer Abweichung zumindest eines Parameters der Antriebseinheit 16b von einem vordefinierten Parameterbereich zu detektieren. Der Parameter charakterisiert eine elektrische Leistungsaufnahme der Antriebseinheit 16b. Die Steuereinheit 18b ist dazu vorgesehen, eine Unterschreitung des Parameters von dem voreingestellten Parameterbereich als eine Entkopplung des Rührelements 14b von der Rühreinheit 12b zu interpretieren. Die Steuereinheit 18b ist dazu vorgesehen, eine Unterschreitung des Parameters von einem weiteren voreingestellten Parameterbereich als eine Entkopplung des Ergänzungsrührelements 58b von dem Rührelement 58b zu interpretieren.

Die Lebensmittelbearbeitungsvorrichtung 10b umfasst eine Datenübertragungseinheit 32b zu einer Datenübertragung mit zumindest einer externen Einheit 36b. Die Datenübertragungseinheit 32b ist zu einem Senden und zu einem Empfang von Daten gemäß dem Bluetooth-Funkstandard ausgebildet. In der Figur 4 ist die externe Einheit 36b dargestellt. Die externe Einheit 36b ist als ein Smartphone 48b ausgebildet und umfasst eine externe Datenübertragungseinheit 52b. Die Steuereinheit 18b ist dazu vorgesehen, mittels der Datenübertragungseinheit 32b zumindest eine die Störung betreffende Information an die externe Einheit 36b zu übertragen. In dem vorliegenden Ausführungsbeispiel überträgt die Steuereinheit 18b in dem Betriebszustand eine Störungsmeldung mittels der Datenübertragungseinheit 32b an das Smartphone 48b, um einen Nutzer über die Störung zu informieren.

### Bezugszeichen

- 10: Lebensmittelbearbeitungsvorrichtung
- 12: Rühreinheit
- 14: Rührelement
- 16: Antriebseinheit
- 18: Steuereinheit
- 20: Fehlerbehebungsprozess
- 22: Signalausgabeeinheit
- 24: optisches Signalausgabeelement
- 26: akustisches Signalausgabeelement
- 28: optisches Störsignal
- 30: akustisches Störsignal
- 32: Datenübertragungseinheit
- 34: externe Einheit
- 36: externe Einheit
- 38: Lebensmittelbearbeitungsgeschirr
- 40: Verfahrensschritt
- 42: weiterer Verfahrensschritt
- 44: optionaler Verfahrensschritt
- 46: Kochfeld
- 48: Smartphone
- 50: externe Datenübertragungseinheit
- 52: externe Datenübertragungseinheit
- 54: weiterer optionaler Verfahrensschritt
- 56: weiterer Verfahrensschritt
- 58: Ergänzungsrührelement
- 60: Aufnahmeraum
- 62: Deckel
- 64: Speichereinheit
- 66: Innenwandung
- 68: Drehachse

## Patentansprüche

1. Lebensmittelbearbeitungsvorrichtung (10a; 10b), insbesondere Gargeschirrvorrichtung, mit zumindest einer Rühreinheit (12a; 12b), umfassend zumindest ein Rührelement (14a; 14b), mit zumindest einer Antriebseinheit (16a; 16b) zu einem Antrieb der Rühreinheit (12a; 12b) und mit einer Steuereinheit (18a; 18b) zu einer Steuerung der Rühreinheit (12a; 12b), **dadurch gekennzeichnet, dass** die Steuereinheit (18a; 18b) dazu vorgesehen ist, eine Störung der Rühreinheit (12a; 12b) zu detektieren und im Falle einer Störung zumindest einen Fehlerbehebungsprozess (20a; 20b) zu einer Behebung der Störung zumindest zu initiieren.

2. Lebensmittelbearbeitungsvorrichtung (10a; 10b) nach Anspruch 1, **dadurch gekennzeichnet, dass** die Steuereinheit (18a; 18b) dazu vorgesehen ist, die Störung anhand einer Abweichung zumindest eines Parameters der Antriebseinheit (16a; 16b) von einem vordefinierten Parameterbereich zu detektieren.

3. Lebensmittelbearbeitungsvorrichtung (10a; 10b) nach Anspruch 2, **dadurch gekennzeichnet, dass** der Parameter eine elektrische Leistungsaufnahme der Antriebseinheit (16a; 16b) charakterisiert.

4. Lebensmittelbearbeitungsvorrichtung (10a; 10b) nach Anspruch 2 oder 3, **dadurch gekennzeichnet, dass** die Steuereinheit (18a; 18b) dazu vorgesehen ist, eine Unterschreitung des Parameters von dem voreingestellten Parameterbereich als eine Entkopplung des Rührelements (14a; 14b) von der Rühreinheit (12a; 12b) zu interpretieren.

5. Lebensmittelbearbeitungsvorrichtung (10a; 10b) nach einem der Ansprüche 2 bis 4, **dadurch gekennzeichnet, dass** die Steuereinheit (18a; 18b) dazu vorgesehen ist, eine Überschreitung des Parameters von dem voreingestellten Parameterbereich als eine Blockierung des Rührelements (14a; 14b) zu interpretieren.

6. Lebensmittelbearbeitungsvorrichtung (10a; 10b) nach einem der vorhergehenden Ansprüche, **gekennzeichnet durch** eine Signalausgabeeinheit (22a; 22b), welche die Steuereinheit (18a; 18b) zur Ausgabe zumindest eines Störsignals (28a, 30a; 28b, 30b) ansteuert.

7. Lebensmittelbearbeitungsvorrichtung (10a; 10b) nach einem der vorhergehenden Ansprüche, **gekennzeichnet durch** eine Datenübertragungseinheit (32a; 32b) zu einer Datenübertragung mit zumindest einer externen Einheit (34a, 36a; 36b).

8. Lebensmittelbearbeitungsvorrichtung (10a; 10b) nach Anspruch 7, **dadurch gekennzeichnet, dass** die Steuereinheit (18a; 18b) dazu vorgesehen ist, mittels der Datenübertragungseinheit (32a; 32b) zumindest eine die Störung betreffende Information an die externe Einheit (34a, 36a; 36b) zu übertragen.

9. Lebensmittelbearbeitungsvorrichtung (10a; 10b) nach einem der vorhergehenden Ansprüche, **dadurch gekennzeichnet, dass** der Fehlerbehebungsprozess (20a; 20b) zumindest eine Richtungsänderung einer Rührbewegung der Rühreinheit (12a; 12b) umfasst.

10. Lebensmittelbearbeitungsvorrichtung (10a; 10b) nach einem der vorhergehenden Ansprüche, **dadurch gekennzeichnet, dass** der Fehlerbehebungsprozess (20a; 20b) zumindest eine zumindest temporäre Veränderung einer Rührgeschwindigkeit der Rühreinheit (12a; 12b) umfasst.

11. Lebensmittelbearbeitungsvorrichtung (10a) zumindest nach Anspruch 7, **dadurch gekennzeichnet, dass** der Fehlerbehebungsprozess (20a) zumindest eine Veränderung eines Betriebszustands einer mit der Rühreinheit (12a) zu einer Lebensmittelbearbeitung gleichzeitig betriebenen externen Einheit (34a) umfasst.

12. Verfahren zum Betrieb einer Lebensmittelbearbeitungsvorrichtung (10a; 10b), insbesondere nach einem der Ansprüche 1 bis 11, mit zumindest einer Rühreinheit (12a; 12b) und mit zumindest einer Antriebseinheit (16a; 16b) zu einem Antrieb der Rühreinheit (12a; 12b), **dadurch gekennzeichnet, dass** in einem Betriebszustand der Rühreinheit (12a; 12b) automatisch eine Störung detektiert und ein Fehlerbehebungsprozess (20a; 20b) zur Behebung der Störung initiiert wird.
